Europäisches Patentamt

European Patent Office

Office européen des brevets

(11) Publication number: **0 264 178**
**A2**

## (12) EUROPEAN PATENT APPLICATION

(21) Application number: **87307438.9**

(22) Date of filing: **21.08.87**

(51) Int. Cl.⁴: **F16L 47/02**

(30) Priority: **21.08.86 GB 8620356**

(43) Date of publication of application:
**20.04.88 Bulletin 88/16**

(84) Designated Contracting States:
**BE DE ES FR GB GR IT NL**

(71) Applicant: **The Croydex Company Limited
Walworth Industrial Estate Central Way
Andover Hampshire SP10 5AW(GB)**

(72) Inventor: **Coveney, Roger Leslie.
6 Hazel Close
Andover Hampshire(GB)**

(74) Representative: **Holliday, Frank et al
Marks & Clerk Friars House 6-10 Parkway
Chelmsford, Essex CM2 0NF(GB)**

(54) Assembly of tap connectors to hoses.

(57) The invention provides a method of permanently assembling a rubber tap connector 1 to a hose 6 using a cyanoacrylate adhesive, which has been found to be both acceptable in performance and life, and economically practicable. In order to overcome potential problems of mechanical failure and leakage in use, it is preferred to apply adhesive both to the interior of the connector 1 and to the exterior of the hose 6 prior to engagement of the hose 6 in the connector 1. The adhesive is thus conveniently applied as a ring 8 or 9 in each case, and the rings 8,9 are caused to merge during the engagment of the connector 1 and the hose 6. Such a procedure leads to an improvement in the mechanical strength and overall performance of the assembly. It is further preferred to provide for clamping of the hose 6 onto the connector 1 after application of adhesive and assembly, so as to ensure intimate contact between the surfaces to be bonded.

FIG.1.

# ASSEMBLY OF TAP CONNECTORS TO HOSES

This invention relates to the assembly of rubber tap connectors, otherwise known as bulbs, to the PVC or other plastics hoses or tubes of shower sprays or shampoo sprays.

For many years past, it has been conventional to assemble a bulb to a hose in this context by means of a ferrule of a suitable rigid plastics material. This ferrule has an enlarged head to snap behind a shoulder moulded-in to the bulb, and the inside of the head converges comparatively sharply to the inner diameter of the ferrule. Spaced from the head is a stop collar to limit entry of the ferrule into the bulb, and also to limit entry of the ferrule into the hose. In practice, the ferrule is forced into the hose to a distance of about 1½ inches (4cm) and is securely gripped thereby, while the head of the ferrule is forced into the bulb until it fits behind the shoulder.

This method of assembly involves the use of an intermediate connecting member, namely the ferrule, and is not easily automated.

Adhesives were not used at the time this process was developed, chiefly because of the dissimilar natures of the materials being used in the assembly. Also, it was considered that that the adhesives then available, even if they could satisfactorily join the hose to the bulb, would not stand up to the environment to which the assembly was to be subject. In particular, it must be remembered that the adhesive must not only hold the parts together, but it must maintain a seal between the bulb and the hose.

Adhesive technology has developed over the last 25 years since this assembly method was first practised, but no serious consideration has apparently been given to replacing the conventional methods and skills of the mechanical "ferrule" fixing by an adhesive bond joining the PVC of the tubing to the rubber of the tap connector or bulb.

It has now surprisingly been discovered that it is possible to eliminate the use of the ferrule and to use a suitable adhesive to secure the hose directly within the bulb while improving the security of the joint, in regard both to mechanical failure and to leakage.

The elimination of the ferrule leads to a cost saving in the elimination of a component, and it is also possible to automate the assembly process, thus leading to further reductions in manufacturing costs.

In accordance with a first aspect of the present invention, there is provided a method of permanently assembling a rubber tap connector or bulb to a hose, in which the connector is secured to the exterior of the hose by means of an adhesive.

A preferred form of adhesive is a cyanoacrylate adhesive, which has been found to be both acceptable in performance and life, and economically practicable. A particular such adhesive, which has been found effective and economic, is that known and sold as LOCTITE SUPERBONDER 415, which is based on a methyl cyanoacrylate monomer, and is of high viscosity.

This particular adhesive is principally recommended for bonding metals and for bonding metal to plastic/rubber assemblies, and especially for irregular or porous parts. It is known to maintain its drop shape on application.

However, its manufacturers were not aware that this particular adhesive would both bond satisfactorily on assembly and also endure for an adequately long working life in the environment of a shower spray or shampoo spray, which is not a permanent fixture on the tap but is attached and removed at frequent intervals in its working life.

These arduous working conditions mean that the adhesive has to stand up to quite severe and regular handling and still maintain the bond and the seal between the hose and the tap connector. A rigorous programme of testing was needed to provide the necessary evidence that the use of adhesive is a practicable possibility in this particular environment.

In order to overcome potential problems of mechanical failure and leakage in use, it is preferred to apply adhesive both to the interior of the connector or bulb and to the exterior of the hose prior to engagement of the hose in the connector or bulb. The adhesive is thus conveniently applied as a ring in each case, and the rings of adhesive are caused to merge during the engagment of the connector or bulb and the hose. Such a procedure leads to an improvement in the mechanical strength and overall performance of the assembly.

It is further preferred to provide for clamping of the hose onto the connector or bulb after application of adhesive and assembly, so as to ensure intimate contact between the surfaces to be bonded. This is necessary since the manufacturing tolerances on the bulbs and the hose are such as to lead to occasional deviations from the design dimensions that the surfaces were not sufficiently intimately in contact to ensure a satisfactory bond.

In accordance with a second aspect of the inveniton, there is provided apparatus for carrying out the method according to the invention as set forth above, comprising a rotary stepping mechanism having a plurality of holding means to be stepped past a plurality of workstations, means for loading a tap connector at a first of the said workstations, means for applying adhesive to the interior of the connector at a succeeding workstation, means for feeding a preset length of hose and introducing an end thereof into the connector at a third workstation, and means for unloading the assembly prior to return to the first workstation.

The adhesive may be applied to the outside of the hose prior to its introduction into the connector, and the holding means may include clamping means to be applied after the introduction of the hose.

In accordance with a third aspect of the invention, there is provided a hose having a connector or bulb assembled thereon by a method in accordance with the invention as set forth above.

The invention will be further described with reference to the accompanying drawings, in which;

Figure I is a sectional view illustrating a hose and a bulb in juxtaposition prior to assembly;

Figure 2 is a view similar to figure I showing the bulb and hose in the assembled condition; and

Figure 3 is a diagrammatic view of an assembly apparatus.

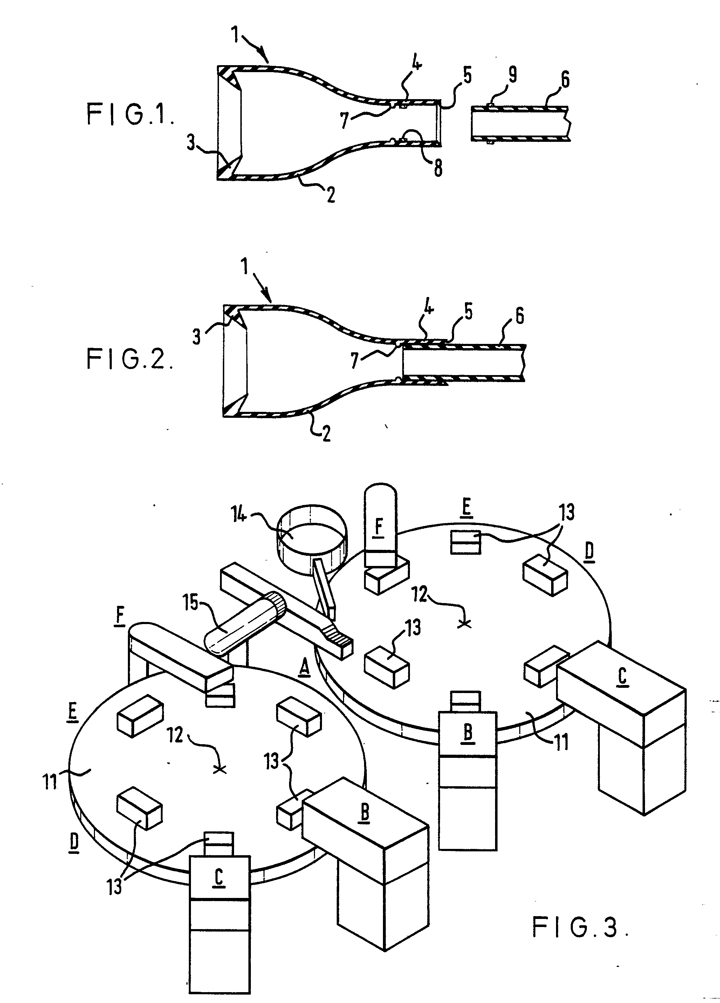

As illustrated in figures I and 2, a tap connector or bulb I comprises a wide portion 2 to go over the tap and including an integral sealing lip 3 to be resiliently deformed during attachment and disconnection. The wide portion tapers into a narrow portion 4 having a chamfered lead-in end 5 to receive an end of a hose 6. A low locating rib 7 is moulded into the bulb I to define the limit of introduction of the hose 6.

Prior to assembly of the hose 6 and bulb I, adhesive is applied to the interior of the bulb I as a ring 8 at a location in the narrow portion 4 and spaced outwardly from the rib 7, and to the outside of the hose 6 as a ring 9 located somewhat inward from the end.

The particular adhesive used in the preferred mode of operation was that sold under the name LOCTITE SUPER BONDER 4I5.

The hose 6 is then introduced into the narrow portion 4 of the bulb I as far as the rib 7, as shown in figure 2, and the two rings 8 and 9 of adhesive are spread over the whole area of engagement, extending from the rib 7 to the open end of the narrow portion 4.

Clamping pressure is then applied to the outside of the hose 6 to ensure intimate engagement of the surfaces to be bonded by the adhesive.

Figure 3 shows diagrammatically a duplex assembly unit. It consists of a pair of turntables II rotatable about vertical axes I2 so as to carry a series of bulb holders I3 stepwise and seriatim through workstations labelled as A, B, C, D, E and F.

A reservoir or bowl I4 of bulbs is shown in conjunction with one of the turntables II, and has been omitted from the other for clarity of illustration. A robotic loading element I5 is also shown in conjunction with the reservoir I4, and its function is to load a bulb onto the holder I3 at station A. On reaching station B, adhesive is applied to the interior of the bulb as previously mentioned.

At station C, tube is drawn from stock and advanced to initial position, adhesive is applied to its exterior, the tube is assembled into the bulb, which already has adhesive applied to its interior, and the tube is then cropped to the required length. Stations D and E include external clamps for application to the exterior of the bulb to bring the mating surfaces into intimate contact to ensure the integrity of the bond, and the assembly is unloaded automatically at station F.

If the apparatus is to be operated semi-manually, the loading and unloading may both take place at station A, or the loading may be manual at station A, with automatic unloading at station F.

Various other modifications may be made within the scope of the invention as set forth in the appended claims.

## Claims

1. A method of permanently assembling a rubber tap connector or bulb to a hose, in which the connector is secured to the exterior of the hose by means of an adhesive.

2. A method as claimed claim I, in which the adhesive is a cyanoacrylate adhesive.

3. A method as claimed in claim I or 2, in which the adhesive is applied both to the interior of the connector or bulb and to the exterior of the hose prior to engagement of the hose in the connector or bulb.

4. A method as claimed in claim 3, in which the adhesive is applied as a ring in each case, and the rings of adhesive are caused to merge during the engagment of the connector or bulb and the hose.

5. A method as claimed in any of the preceding claims, in which the hose is clamped onto the connector or bulb after application of adhesive and assembly, so as to ensure intimate contact between the surfaces to be bonded.

6. A method of permanently assembling a rubber tap connector to a PVC or other plastics hose, substantially as hereinbefore described with reference to the accompanying drawings.

7. Apparatus for carrying out the method according to the any of the preceding claims, comprising a rotary stepping mechanism having a plurality of holding means to be stepped past a plurality of workstations, means for loading a tap connector at a first of the said workstations, means for applying adhesive to the interior of the connector at a succeeding workstation, means for feeding a preset length of hose and introducing an end thereof into the connector at a third workstation, and means for unloading the assembly prior to return to the first workstation.

8. Apparatus as claimed in claim 7, further including means for applying adhesive to the outside of the hose prior to its introduction into the connector.

9. Apparatus as claimed in claim 7 or 8, comprising clamping means to be applied to the connector after the introduction of the hose.

10. A hose having a connector or bulb assembled thereon by a method as claimed in any of claims 1 to 6.

FIG.1.

FIG.2.

FIG.3.